# EUROPEAN PATENT APPLICATION

(11) **EP 3 486 765 A1**
(43) Date of publication of application: **22.05.2019**
(21) Application number: 17843099.7
(22) Date of filing: 29.03.2017
(51) Int. Cl.: G06F 3/12, B41J 29/38, H04N 1/00

(54) **DEVICE STATE MONITORING SYSTEM, DEVICE STATE MONITORING DEVICE, AND DEVICE STATE MONITORING METHOD**

(30) Priority: 26.08.2016 JP 2016165412
(71) Applicant: Star Micronics Co., Ltd., Shizuoka-shi, Shizuoka 422-8654 (JP)
(72) Inventor: IGARASHI, Keisuke, Shizuoka-shi Shizuoka 422-8654 (JP)
(74) Representative: Manitz Finsterwald Patent- und Rechtsanwaltspartnerschaft mbB
(86) International application number: PCT/JP2017/012803
(87) International publication number: WO 2018/037609

(57) **Abstract**

Whenever there happens a change in the state of a device, a host is assured of the current state information of the device. The state information returned from the printer 300 as a response to an inquiry sent fron the web print server 200 is stored in a storing unit 26 of the web print server 200. A result of determination representing whether there happens a change in the state of the printer 300 is stored in the storing unit 26. The information stored in the storing unit 26 is notified to the tablet 100 as a response to an inquiry sent from the tablet 100 to the web print server 200. The current state information of the printer 300 is notified to the tablet 100 via the web print server 200 whenever there happens a change in the state of the printer 300 regardless of whether the printer 300 is operated under control of the tablet 100.

## Description

### TECHNICAL FIELD

The present invention relates to a device state monitoring system, a device state monitoring apparatus, and a device state monitoring method, especially to a system in which a state of a device is monitored by a host and a web server.

### BACKGROUDART

A printer driver for use in a host computer is generally provided with a state monitoring function which displays a message about a state of a printer on a screen of the computer. The message is something like an ink shortage warning and a printing error.

A well-known ASB (Auto Status Back) function automatically sends information on a state of a printer to a host computer whenever a change in the state is detected. The change in the state may be something like a cover-opened/cover-closed, lack of paper, and completion of printing.

In a printing system disclosed in Patent Document 1, a print command is generated by a print controller and sent to the printer. The print command contains an ASB enable command and a state acquiring command. Specifially, the ASB enable command is added to the top of a printing data received from the host while the state acquiring command is added to the end of the printing data. The print controller acquires a change in the state of the printer whatever detected during printing (until a response to the state acquiring command is received). The change may be something like a lack of paper, onlilne/offline, ink/toner shortage, and battery shortage. The print controller returns the current state of the printer to the host along with a printing result (success or failure).

It is also well known that in a network system where several printers are connected to a single host, status information of each printer is acquired and displayed to allow a user to select a printer for use.

In a network system disclosed in Patent Document 2, an interface board connected to a client terminal searches for a printer in the network to acquire device information from an MIB (Management Information Base) of each of the available printers. A device list (a list of avalable printers) is accordingly generated and displayed on a printer selection screen. The device information may be something like a state of the printer (normal/error), printing setting information (paper setting, number of sheets, print quality, color/monochrome, image processing), optional apparatus information (a paper cassette and a duplex printing unit), and consumable information (paper shortage and ink shortage).

### PRIOR ART DOCUMENT

### PATENT DOCUMENT

Patent Document 1: Japanese Patent Application Publication No.2013-210885
Patent Document 2: Japanese Patent 5728994

### TECHNICAL PROBLEM

In either system disclosed in Patent Documents 1 and 2, however, a state of the printer is acquired only when printing is executed. Any change in the state of the printer is never notified to the host when it happens at the other time.

Patent Document 1 discloses that the host sends an emply data at regular intervals to regularly acquire a state of the printer by having the emply data printing executed.

Such method is, however, useful in a printer having the ASB function.

Even if the printer is provided with the ASB function, a current state of the printer can be returned to the print controller only when there happens a change in the state of the printer during a very short period from the emply data print command tramsmission to the receipt of a response to the state acquiring command. The host is not notified of a current state of the printer when there happens a change in the state of the printer at the other time but the time of the empty data transmission.

The purpose of the invention is to provide a system in which any current state of a device is notified to the host whenever there happens a change in the state of the device such as a printer.

### TECHNICAL SOLUTION

In the invention, an inquiry about a state of a device is periodically sent. In response to the inquiry, information on the state of the device is returned from the device and acquired by a web server. The state information is stored in a storing unit. The state information acquired at the present time and the stored state information acquired before the present time are compared to determine whether there happens a change in the state of the device. The result of determination is notified to the host from the web server. The current state information is also notified to the host when it is determined that there happens a change in the state of the device.

### ADVANTAGEOUS EFFECTS

According to the invention, whenever there happens a change in the state of a device regardless of whether the device is operated under control of a host, state information representing the updated state of the device is returned from the device to the web server. The state information acquired at the present time and the stored state information acquired before the present time are compared by the web server to determine whether there happens a change in the state of the device. The current state information is notified to the host when it is determined that there happens a change in the state of the device. The host is assured of the current state information whenever there happens a change in the state of the device.

### BRIEF DESCRIPTION OF THE DRAWINGS

FIG. 1 is a block diagram showing a configuration of a device state monitoring system of an embodiment of the invention.
FIG. 2 is a block diagram showing a functional configuration of the device state monitoring system of the embodiment of the invention.
FIG. 3 is a processing flow chart of a tablet and a web print server.
FIG. 4 is a processing flow chart of the web print server and a printer.
FIG. 5 is a block diagram showing another configuration of the device state monitoring system of the embodiment of the invention.
FIG. 6 is a block diagram showing another configuration of the device state monitoring system of the embodiment of the invention.

### MODE FOR INVENTION

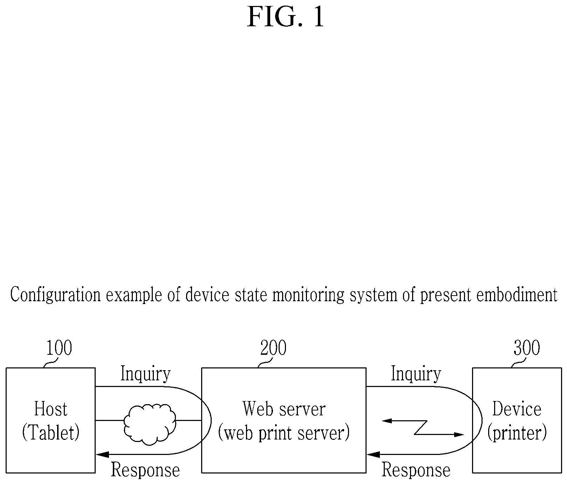

An embodiment of the present invention is being described referring to the drawings. FIG. 1 is a block diagram showing a configuration of a device state monitoring system of an embodiment of the invention. The device state monitoring system comprises a web server 200 running a web application, a host 100 using the web application, and a device 300 executing a predetermined operation according to a command from the host.

The host 100 may be a tablet (hereinafter "a tablet 100"). The web server 200 may be a web print server (hereinafter "a web print server 200"). The device 300 may be a printer (hereinafter "a printer 300). The tablet 100 is connected to the web print server 200 via an HTML (HyperText Markup Language) web network. The web print server 200 is connected to the printer 300 over a wireless network such as Bluetooth and wireless LAN or over a wired network such as a USB (Universal Serial Bus) and a wired LAN.

The tablet 100 uses the web application run by the web print server 200 via a web browser to generate a printing data to be sent to the printer 300 for a printout. The invention is not related to a printing procedure, thus an explanation of which is being omitted.

The purpose of the device state monitoring system of the invention is to monitor the state of the printer 300 by the tablet 100 and the web print server 200 and to notify the tablet 100 of the state information of the printer 300. The state of the printer 300 to be monitored may be at least one of the states such as a cover-opened/cover-closed, paper-out or paper near-end, ink/toner shortage, online/offline, and battery shortage.

As shown in FIG. 1, the tablet 100 sends an inquiry about the state of the printer 300 to the web print server 200 over HTTP. In response to the inquiry, the tablet 100 gets information on a change in the state of the printer 300 from the web print server 200. The tablet 100 periodically sends the inquiries to the web print server 200.

The web print server 200 sends an inquiry about the state of the printer 300 to the printer 300 over wireless communication. In response to the inquiry, the web print server 200 gets information on the current state of the printer 300. The web print server 200 periodically sends the inquiries to the printer 300. Sending the inquiries from the web print server 200 and from the tablet 100 happen asynchronously.

The web print server 200 has already acquired some state information on the printer 300 whenever the tablet 100 sends an inquiry to the web print server 200 since the web print server 200 periodically and asynchronously sends the inquiries and get some state information from the printer 300. It is not necessary for the web print server 200 to send a new inquiry and wait for a response from the printer 300 whenever it receives an inquiry from the tablet 100. The web print server 200 can immediately notify the tablet 100 of the state of the printer 300 upon receiving the inquiry from the tablet 100.

Immediately after the web print server 200 is activated, it is probable that the web print server 200 has not yet acquired some state information on the printer 300 when it receives an inquiry from the tablet 100. The web print server 200 may acquire state information of the printer 300 and store the acquired information in a storing unit 26 just when connected to the printer 300.

It is determined by the web print server 200 whether there happens a change in the state of the printer 300 referring to the stored state information which has been acquired before the present time. According to the determination, the web print server 200 may return state change information to the tablet 100. The state change information may be any information on whether there happens a change in the state of the printer 300. The state change information may be any information representing the current state of the printer 300. The current state information may be returned only when there happens a change in the state of the printer 300.

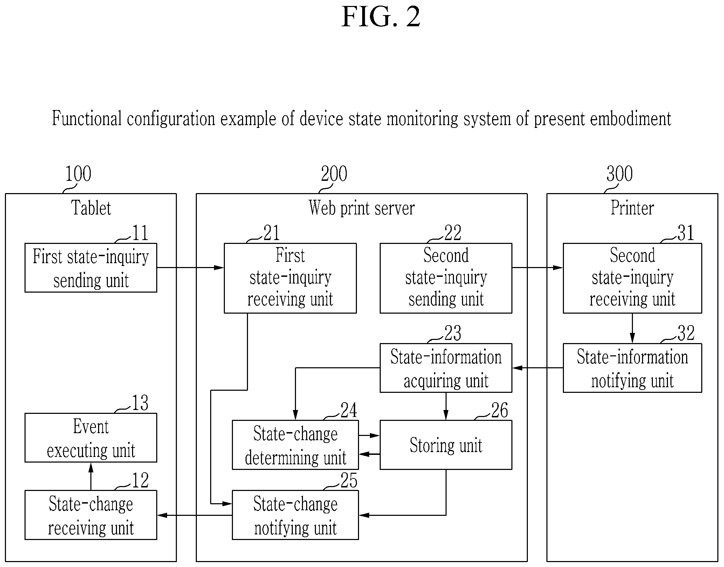

FIG. 2 is a block diagram showing a functional configuration of the device state monitoring system of the embodiment of the invention. The system for monitoring the state of the printer 300 is illustrated. Any other configuration is omitted.

The tablet 100 comprises a first state-inquiry sending unit 11, a state-change receiving unit 12, and an event executing unit 13. Any of the units 11 to 13 may be embodied by any of hardware, DSP (Digital Signal Processor), and software. Any of them may be provided with any of CPU, RAM, and ROM. A program stored in a storing medium such as a RAM, ROM, hard disc and semiconductor memory may be executed. The program may use JavaScript (registered trademark) acquired by the tablet 100 from the web print server 200.

The web print server 200 comprises a first state-inquiry receiving unit 21, a second state-inquiry sending unit 22, a state-information acquiring unit 23, a state-change determining unit 24, and a state-change notifying unit 25. The web print server 200 further comprises the storing unit 26. The web print server 200 may be an example of the device state monitoring apparatus while the first state-inquiry receiving unit 21 may be an example of a state-inquiry receiving unit.

Any of the units 21 to 25 may be embodied by any of hardware, DSP (Digital Signal Processor), and software. Any of them may be provided with any of CPU, RAM, and ROM. A program stored in a storing medium such as a RAM, ROM, hard disc and semiconductor memory may be executed.

The printer 300 comprises a second state-inquiry receiving unit 31 and a state-information notifying unit 32. Any of the units 31 to 32 may be embodied by any of hardware, DSP (Digital Signal Processor), and software. Any of them may be provided with any of CPU, RAM, and ROM. A program stored in a storing medium such as a RAM, ROM, hard disc and semiconductor memory may be executed.

The first state-inquiry sending unit 11 of the tablet 100 periodically sends inquiries about the state of the printer 300 to the web print server 200. The first state-inquiry receiving unit 21 of the web print server 200 receives the inquiries periodically sent from the first state-inquiry sending unit 11. The first state-inquiry receiving unit 21 informs the state-change notifying unit 25 of a receipt of each inquiry.

The second state-inquiry sending unit 22 of the web print server 200 periodically sends inquiries about the state of the printer 300 to the printer 300. Sending the inquiries from the second state-inquiry sending unit 22 happens asynchronously with sending the inquiries from the first state-inquiry sending unit 11. Each of the first state-inquiry sending unit 11 of the tablet 100 and the second state-inquiry sending unit 22 of the web print server 200 may be an example of a state-inquiry sending unit.

The second state-inquiry receiving unit 31 of the printer 300 receives the inquiries periodically sent from the second state-inquiry sending unit 22. The state-information notifying unit 32 detects the current (the latest) state of the printer 300 upon receipt of an inquiry from the web print server 200. The state-information notifying unit 32 generates state information accordingly and sends the generated state information to the web print server 200.

The state-information acquiring unit 23 of the web print server 200 receives the state information sent from the state-information notifying unit 32 of the printer 300. The received state information is stored in the storing unit 26. The storing unit 26 may be a temporary memory which stores at least the current state information acquired at the present time. The web print server 200 may store the acquired state information in association with the current date and time representing the date and time the state information is acquired.

The state-change determining unit 24 compares the current state information acquired at the present time and the stored state information acquired before the present time to determine whether there happens a change in the state of the printer 300. The result of determination (representing whether there happens a change in the state) is stored in the storing unit 26. The past state information stored in the storing unit 26 may be replaced by the current state information after the determination is complete.

If any information is acquired for each of the states such as a cover-opened/cover-closed, paper-out or paper near-end, ink/toner shortage, online/offline, and battery shortage, the state-change determining unit 24 determines whether there happens a change for each of the states. The storing unit 26 keeps the result of determination made by the state-change determining unit 24 and the current state information sent from the state-information acquiring unit 23 until a next determination is made.

The state-change notifying unit 25 notifies the tablet 100 of the state change information as a response to the inquiry from the first state-inquiry sending unit 11. The state change information may include the result of determination made by the state-change determining unit (representing whether there happens a change in the state of the printer 300). The state change information may include the current state information when it is determined that there happens a change in the state of the printer 300. Any state change information has been stored in the storing unit 26.

The state-change notifying unit 25 retrieves the state change information from the storing unit 26 upon receipt of an inquiry from the tablet 100 via the first state-inquiry receiving unit 21. The state change information may include the result of determination and further any current state information (if determined there happens a change). The state change information is notified to the tablet 100 for each and every state such as a cover-opened/cover-closed, paper-out or paper near-end, ink/toner shortage, online/offline, and battery shortage. For any particular state for which there happens no change, even the result of determination may be omitted from the notification.

The state-change receiving unit 12 of the tablet 100 receives the state change information sent from the state-change notifying unit 25 of the web print server 200 as a response to the inquiry from the first state-inquiry sending unit 11. The event executing unit 13 retrieves a predetermined event function to execute a predetermined processing according to the received current state information when there happens a change in the state of the printer 300.

The event function may be retrieved according to the current state information on a particular state for which a change has been recognized. For example, when the cover-open state is notified, the event function for the cover-open may be retrieved and executed. A cover-open message may be accordingly displayed.

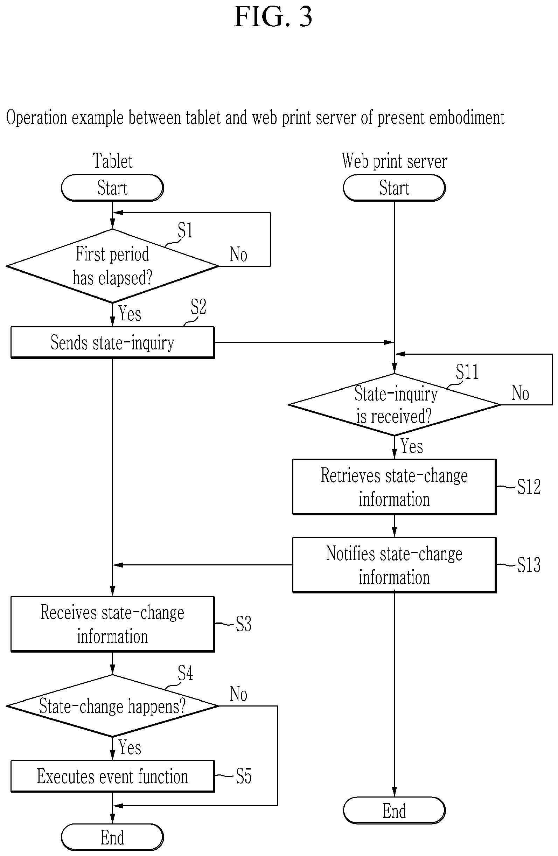

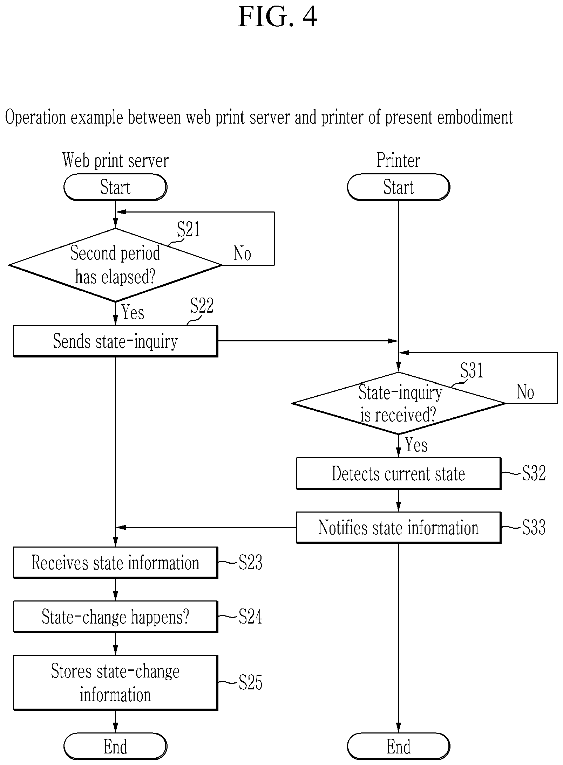

FIG. 3 is a processing flow chart of the tablet 100 and the web print server 200. FIG. 4 is a processing flow chart of the web print server 200 and the printer 300. The operations in FIG. 3 and FIG. 4 are asynchronously and independently performed.

In FIG. 3, the first state-inquiry sending unit 11 of the tablet 100 determines whether a first predetermined period of time has elapsed (Step S1). The first predetermined period of time may be an interval of the periodical inquiries about the state of the printer 300. The Step S1 determination is repeated until the first predetermined period of time has elapsed since the most recent inquiry. If the first predetermined period of time has elapsed, the first state-inquiry sending unit 11 sends an inquiry about the state of the printer 300 to the web print server 200 (Step S2).

The first state-inquiry receiving unit 21 of the web print server 200 determines whether an inquiry about the state of the printer 300 sent from the first state-inquiry sending unit 11 is received (Step S11). The Step S11 determination is repeated until the inquiry is received. If the inquiry is received, the first state-inquiry receiving unit 21 informs the state-change notifying unit 25 of the receipt of the inquiry.

The state-change notifying unit 25 retrieves the state change information from the storing unit 26 (Step S12) and notifies the tablet 100 of the state change information (Step S13). The web print server 200 may complete a single HTTP session by performing a series of operation from the receipt of the inquiry to the response to the inquiry.

The state-change receiving unit 12 of the tablet 100 receives the state change information sent from the state-change notifying unit 25 (Step S3) as a response to the inquiry sent from the first state-inquiry sending unit 11. The event executing unit 13 determines whether there happens a change in the state of the printer 300 according to the state change information received by the state-change receiving unit 12 (Step S4).

If it is determined that there happens a change in the state of the printer 300, the event executing unit 13 retrieves a predetermined event function to execute a predetermined processing according to the received current state information (Step S5). The tablet 100 may then complete a single processing session. If it is determined that there happens no change, the tablet 100 may complete a single processing session without retrieving an event function.

In FIG. 4, the second state-inquiry sending unit 22 of the web print server 200 determines whether a second predetermined period of time has elapsed (Step S21). The second predetermined period of time may be an interval of the periodical inquiries about the state of the printer 300. The Step S21 determination is repeated until the second predetermined period of time has elapsed since the most recent inquiry. If the second predetermined period of time has elapsed, the second state-inquiry sending unit 22 sends an inquiry about the state of the printer 300 to the printer 300 (Step S22).

The second state-inquiry receiving unit 31 of the printer 300 determines whether an inquiry about the state of the printer 300 sent from the second state-inquiry sending unit 22 is received (Step S31). The Step S31 determination is repeated until the inquiry is received. If the inquiry is received, the state-information notifying unit 32 detects the current state of the printer 300 to generate the state information accordingly (Step S32). The state-information notifying unit 32 notifies the web print server 200 of the state information (Step S33).

The state-information acquiring unit 23 of the web print server 200 receives the state information sent from the state-information notifying unit 32 (Step S23) as a response to the inquiry sent from the second state-inquiry sending unit 22. The state-change determining unit 24 compares the current state information acquired at the present time and the stored state information acquired before the present time to determine whether there happens a change in the state of the printer 300 (Step S24).

The current state information received in Step S23 and the result of determination made in Step S24 are stored in the storing unit 26 (Step S25). Then, the web print server 200 may complete a single processing session.

As described above, the web print server 200 sends the periodical inquiries about the state of the printer 300. Any state information received as a response to each inquiry is stored in the storing unit 26. The current state information, which is acquired at the present time, and the past state information, which has been acquired before the present time and stored in the storing unit 26, are compared to determine whether there happens a change in the state of the printer 300. The result of determination is also stored in the storing unit 26. The tablet 100 sends the periodical inquiries about the state of the printer 300. The state change information stored in the storing unit 26 is notified to the tablet as a response to each inquiry.

According to the embodiment, the current state information of the printer 300 is returned to the web print server 200 in response to each of the periodical inquiries sent from the web print server 200 whenever there happens a change in the state of the printer 300 regardless of whether the printer 300 is operated under control of the tablet 100. When it is determined by the web print server 200 that there happens a change in the state of the printer 300, the current state information is returned to the tablet 100 in response to each of the periodical inquiries sent from the tablet 100. The tablet 100 is assured of the current state of the printer 300 whenever there happens a change in the state of the printer 300.

Sending the periodical inquiries from the tablet 100 and from the web print server 200 are asynchronously and independently performed. The web print server 200 has already acquired some state information of the printer 300 whenever the tablet 100 sends an inquiry to the web print server 200. It is not necessary for the web print server 200 to send a new inquiry and wait for a response from the printer 300 whenever it receives an inquiry from the tablet 100. The web print server 200 can immediately notify the tablet 100 of the state of the printer 300 upon receiving the inquiry from the tablet 100.

In this embodiment, the tablet 100 and the web print server 200 are connected over HTTP web network. The tablet 100 can get some state information of the printer 300 and even some state change information (representing whether there happens a change in the state) during a single processing session even if the connection is lost every single session. The tablet 100 does not need a dedicated driver software to get the state change information. A plurality of tablets 100 can be simultaneously connected to the web print server 200 and each of them can get the information on the printer 300.

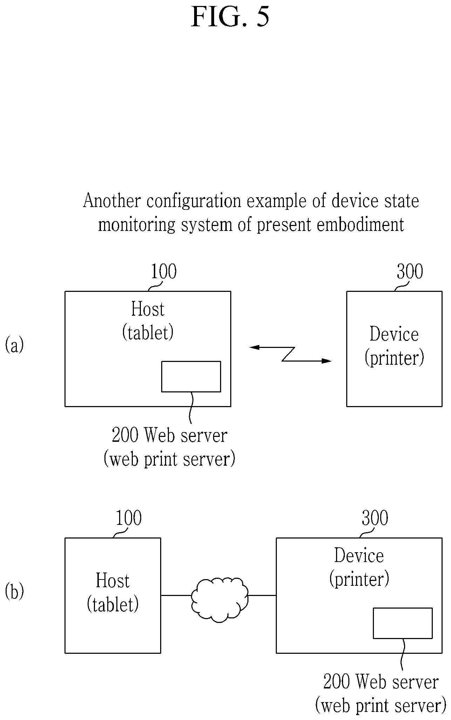

The tablet 100, the web print server 200, and the printer 300 respectively may be separated devices. Instead the tablet 100 may perform a web print server function as shown in FIG. 5(a). Instead the printer 300 may perform the web print server function as shown in FIG. 5 (b).

Sending the periodical inquiries from the tablet 100 and from the web print server 200 may be asynchronously and independently performed. Instead the web print server 200 may send an inquiry to the printer 300 after it receives an inquiry from the tablet 100 though response performance is worse.

The state-change notifying unit 25 may inform the tablet 100 of the current state information if it is determined by the state-change determining unit 24 that there happens a change in the state of the printer 300. Instead the state-change notifying unit 25 may send both the current state information and the past state information. For example, information on ink/toner shortage may be "100 to 80" which represents a decrease by 20 percent. The storing unit 26 may have both the current state information and at least the most recent one among the past information. Instead the storing unit 26 may have a history of the change by combining the current state information and the past state information.

The tablet 100 may be a host computer. Instead any of smart phone, personal computer, POS server, and POS terminal may be the host computer.

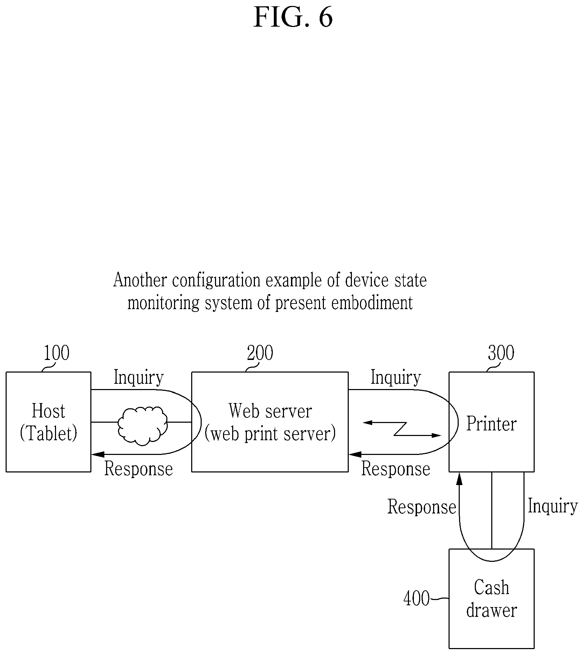

The printer 300 may be a device to be monitored. Instead a set of the printer 300 and a cash drawer 400 connected thereto may be the device to be monitored as shown in FIG. 6. The printer 300 may send periodical inquiries about the state of the cash drawer 400 and store some state information of the cash drawer 400 whenever a response to each inquiry is received. The printer 300 may return the state information of the cash drawer 400 in addition to own state information as a response to an inquiry from the web print server 200. Instead the printer 300 may return only the state information of the cash drawer 400 regardless of the state of the printer 300.

The cash drawer 400 in FIG. 6 may be replaced by any other device such as a BCR (bar code reader), payment terminal, measuring equipment, communication unit, scanner, facsimile, and a storage.

A device to be monitored may be connected to the printer 300 as shown in FIG. 6. Instead the web print server 200 may be replaced by a web server running a web application capable of operating the device. Then, the device may be connected to the web server.

The embodiment as described above is only an example of an embodiment of the invention. The technical scope of the invention is not limited thereto. The invention may be implemented in various forms within the scope.

### DESCRPTION OF SYMBOLS

- 11: first state-inquiry sending unit
- 12: state-change receiving unit
- 13: event executing unit
- 21: first state-inquiry receiving unit
- 22: second state-inquiry sending unit
- 23: state-information acquiring unit
- 24: state-change determining unit
- 25: state-change notifying unit
- 26: storing unit
- 31: second state-inquiry receiving unit
- 32: state-information notifying unit
- 100: tablet (host)
- 200: web print server (web server)
- 300: printer (device)
- 400: cash drawer (device)

## Claims

1. A device state monitoring system for monitoring a device by a host and a web server, the system being provided with the web server capable of running a web application, the host capable of accessing the web application, and the device capable of performing a predetermined operation under control of the host, the system comprising:
a state-inquiry sending unit which periodically sends an inquiry about a state of the device;
a state-information acquiring unit of the web server which acquires a state information returned from the device as a response to the inquiry sent from the state-inquiry sending unit and stores the state information in a storing unit;
a state-change determining unit which compares the state information acquired at the present time and the stored state information acquired before the present time to determine whether there happens a change in the state of the device; and
a state-change notifying unit of the web server which notifies the host of a result of determination made by the state-change determining unit, the state-change notifying unit further notifying the host of the state information acquired at the present time at least when it is determined that there happens a change in the state of the device.

2. The device state monitoring system of claim 1, wherein the state-inquiry sending unit comprises a first state-inquiry sending unit which periodically sends the inquiry from the host to the web server and a second state-inquiry sending unit which periodically sends the inquiry from the web server to the device,
the state-information acquiring unit acquires the state information returned from the device as a response to the inquiry sent from the second state-inquiry sending unit, and
the state-change notifying unit notifies the host of the result of determination made by the state-change determining unit as a response to the inquiry sent from the first state-inquiry sending unit.

3. The device state monitoring system of claim 2, wherein sending the inquiry from the first state-inquiry sending unit and sending the inquiry from the second state-inquiry sending unit happen asynchronously.

4. The device state monitoring system of any of claims 1 to 3, wherein the host and the web server are connected over a web network while the web server and the device are connected over a network other than the web network.

5. The device state monitoring system of any of claims 1 to 4 further comprising an event executing unit which retrieves a predetermined event function to execute a predetermined processing according to the state information notified to the host when there happens a change in the state of the device.

6. The device state monitoring system of any of claims 1 to 5, wherin the host contains the web server.

7. The device state monitoring system of any of claims 1 to 5, wherin the device contains the web server.

8. A device state monitoring apparatus comprising:
a state-inquiry receiving unit which periodically receives an inquiry about a state of a device from a host;
a state-inquiry sending unit which periodically sends the inquiry to the device;
a state-information acquiring unit which acquires a state information returned from the device as a response to the inquiry sent from the state-inquiry sending unit and stores the state information in a storing unit;
a state-change determining unit which compares the state information acquired at the present time and the stored state information acquired before the present time to determine whether there happens a change in the state of the device; and
a state-change notifying unit which notifies the host of a result of determination made by the state-change determining unit as a response to the inquiry received by the state-inquiry receiving unit, the state-change notifying unit further notifying the host of the state information acquired at the present time at least when it is determined that there happens a change in the state of the device.

9. The device state monitoring apparatus of claim 8, wherein sending the inquiry from the state-inquiry sending unit and receiving the inquiry by the state-inquiry receiving unit happen asynchronously.

10. A device state monitoring method for monitoring a device by a host and a web server in a system provided with the web server capable of running a web application, the host capable of accessing the web application, and the device capable of performing a predetermined operation under control of the host, the method, comprising:
periodically sending an inquiry about a state of the device from a first state-inquiry sending unit of the host to the web server;
periodically sending an inquiry about a state of the device from a second state-inquiry sending unit of the web server to the device;
acquiring a state information by a state-information acquiring unit of the web server, wherein the state information being returned from the device as a response to the inquiry sent from the second state-inquiry sending unit;
storing the state information in a storing unit by the state-information acquiring unit;
comparing the state information acquired at the present time and the stored state information acquired before the present time by a state-change determining unit of the web server to determine whether there happens a change in the state of the device; and
notifying the host of a result of determination by a state-change notifying unit of the web server, wherein the result of determination is made by the state-change determining unit, and further notifying the host of the state information acquired at the present time at least when it is determined that there happens a change in the state of the device.

11. The device state monitoring method of claim 10, wherein sending the inquiry from the host to the web server and sending the inquiry from the web server to the device happen asynchronously.
